# FASCICULE DE BREVET EUROPEEN

(11) **EP 0 826 641 B1**
(45) Date de publication et mention de la délivrance du brevet: **05.12.2001**
(21) Numéro de dépôt: 97401958.0
(22) Date de dépôt: 21.08.1997
(51) Int. Cl.: C03C 17/36, B32B 17/06, G02B 5/28

(54) **Vitrage comprenant un substrat muni d'un empilement de couches minces pour la protection solaire et/ou l'isolation thermique**
Für den Sonnenschutz und/oder zur Wärmeisolierung dienende Verglasung bestehend aus einem mit dünnen Lagen mehrfach beschichtetem Substrat
Glazing comprising a substrate furnished with a multiplicity of thin layers providing thermal insulation and/or solar protection

(30) Priorité: 24.08.1996 DE 19634272
(43) Date de publication de la demande: 04.03.1998
(73) Titulaire: SAINT-GOBAIN GLASS FRANCE, 92400 Courbevoie (FR)
(72) Inventeur: Huhn, Norbert, 52134 Herzogenrath (DE); Heister, Ursula, 52064 Aachen (DE); Mathar, Gerd, 52070 Aachen (DE)
(74) Mandataire: Renous Chan, Véronique

(56) Documents cités:
- EP-B- 0 332 717
- EP-B- 0 432 219

## Description

La présente invention concerne un vitrage comprenant au moins un substrat transparent muni d'un empilement de couches minces comportant au moins deux couches fonctionnelles à propriétés de réflexion dans l'infrarouge et/ou dans le rayonnement solaire, notamment métalliques, alternées avec trois revêtements comportant chacun au moins une couche en matériau diélectrique, la couche en matériau diélectrique du revêtement « interne » présentant une épaisseur optique comprise entre 140 et 220 nm.

L'invention sera plus particulièrement décrite pour une utilisation en tant que pare-brise d'un véhicule automobile, mais elle n'est pas limitée pour autant à une telle application.

Des empilements de couches minces du type de ceux mentionnés ci-dessus sont décrits dans les documents EP-0 332 717 B1 et EP-0 432 219 B1. Ils sont particulièrement intéressants pour l'utilisation dans le cas de vitrages automobiles, parce qu'ils permettent la fabrication de vitrages qui présentent une réflexion d'énergie totale élevée et réduisent par conséquent fortement le rayonnement thermique parvenant à l'intérieur du véhicule, mais présentent simultanément une transmission élevée dans le domaine du spectre visible. Les pare-brise par exemple doivent présenter une transmission dans le domaine du spectre visible d'au moins 75%. Mais du fait de leur surface importante, les pare-brise participent à l'échauffement du véhicule par le rayonnement solaire. Donc, l'atténuation de la réflexion du rayonnement thermique (réflexion d'énergie totale) de ces mêmes pare-brise doit, simultanément à la valeur élevée de la transmission lumineuse précisée ci-dessus valoir au moins environ 30%.

Comme il est connu du document EP-0 332 717 B1, il est nécessaire pour l'obtention des valeurs optiques requises pour les pare-brise de respecter certaines limites quant à l'épaisseur optique des couches minces. En l'occurence, il est dit dans ce document que l'épaisseur géométrique des couches d'argent doit à chaque fois être de 6 à 12 nm, l'épaisseur géométrique des couches de ZnO inférieure et supérieure doit être à chaque fois la même et de 20 à 60 nm, et l'épaisseur géométrique de la couche de ZnO médiane doit être de 40 à 120 nm. A l'extérieur de ces domaines d'épaisseur pour les couches, les valeurs de réflexion et de transmission requises ne sont pas atteintes. Par modification de l'épaisseur des différentes couches à l'intérieur des limites mentionnées, on peut faire varier la couleur de réflexion, sachant qu'une structure de couches symétrique est cependant invariablement conservée. En particulier, les épaisseurs géométriques des couches de ZnO inférieure et supérieure sont les mêmes et présentent au maximum une différence d'épaisseur de 25%.

Le document EP-0 432 219 B1 a trait également à la fabrication d'empilements de couches minces du type mentionné dans le préambule présentant une structure optimale pour l'utilisation dans des vitrages automobiles. Il est connu, d'après ce document, que les couches de ZnO inférieure et supérieure doivent être d'épaisseurs géométriques égales, et chacune de 30 à 50 nm. L'épaisseur préférée de la couche de ZnO médiane doit être de 85 à 110 nm. A l'intérieur de cet empilement de couches présentant en principe la même épaisseur des couches de ZnO inférieure et supérieure, il est connu de par ce document d'influencer la couleur de réflexion d'une part par modification des épaisseurs géométriques des couches de ZnO, mais d'autre part aussi par modification de l'épaisseur des deux couches d'argent, sachant en particulier que la couche d'argent tournée vers l'habitacle présente une épaisseur valant 65 à 85% de l'épaisseur de la couche d'argent tournée vers l'extérieur. Cependant, la couleur est dans ce cas sensiblement influencée dans le sens souhaité par modification de l'épaisseur de la couche de ZnO médiane.

Il s'est avéré qu'on peut certes fabriquer, par variation des épaisseurs géométriques de couches à l'intérieur des domaines connus, différentes variantes de couleur de l'empilement de couches, mais qu'il n'est cependant pas possible de cette manière de fabriquer des couches réfléchissant intensément dans le bleu qui remplissent les conditions supplémentaires mentionnées ci-dessus en ce qui concerne la transmission et la réflexion. Mais une couleur de réflexion intense dans le bleu peut être souhaitable pour s'assurer que l'impression de couleur d'un pare-brise de ce type soit en harmonie avec l'impression de couleur par exemple des vitres latérales adjacentes du même véhicule, lorsque ces vitrages adjacentes réfléchissent intensément dans le bleu. Une réflexion intense dans le bleu peut être obtenue notamment pour des vitres latérales, grâce à l'empilement de couches connu puisque les vitres latérales doivent présenter suivant les normes en application et, contrairement aux pare-brise, une transmission de 70% seulement.

L'invention a pour but de proposer un vitrage comprenant au moins un substrat transparent muni d'un empilement de couches minces du type mentionné plus haut, qui d'une part présente une couleur en réflexion intense dans le bleu, et d'autre part présente simultanément une transmission dans le domaine visible supérieure à 70% et une réflexion d'énergie totale d'au moins 30%.

L'invention a pour objet un vitrage comprenant au moins un substrat transparent muni d'un empilement de couches minces comportant au moins deux couches fonctionnelles à propriétés de réflexion dans l'infrarouge et/ou dans le rayonnement solaire, notamment métalliques, alternées avec trois revêtements comportant chacun au moins une couche en matériau diélectrique, la couche en matériau diélectrique du revêtement « interne » présentant une épaisseur optique comprise entre 140 et 220 nm, notamment entre 152 et 200 nm.

L'invention réside dans le fait que l'épaisseur optique d'une des deux couches en matériau diélectrique des revêtements « externes » est égale à au moins 1,8 fois, notamment comprise entre 1,9 et 2,5 fois, celle de l'autre de ces deux couches.

Dans le cadre de l'invention, il faut comprendre par revêtement « interne », le revêtement disposé entre les deux couches fonctionnelles.

De même, il faut comprendre par revêtements « externes », les revêtements situés de part et d'autre des deux couches fonctionnelles, le revêtement « externe » inférieur étant celui adjacent à la surface du substrat, le revêtement « externe » supérieur étant celui surmontant la couche fonctionnelle la plus éloignée du substrat transparent.

On rappelle enfin que l'épaisseur optique est le produit de l'épaisseur géométrique par l'indice de réfraction de la couche.

Avantageusement, au moins une des deux couches fonctionnelles est en argent, ou en alliage métallique comportant de l'argent. De préférence, l'épaisseur géométrique des couches fonctionnelles est inférieure à 15 nm, de préférence encore comprise entre 8 et 10 nm.

Selon une variante très avantageuse de l'invention, au moins un des revêtements surmontant une des deux couches fonctionnelles comprend une fine couche métallique « barrière » au moins partiellement oxydée, de préférence d'une épaisseur de 0,5 à 4 nm et notamment choisie parmi au moins un des métaux comprenant Ti, Ta, Nb, Ni, Cr, Zn, Sn ou un alliage du type acier inoxydable ou alliage Ni-Cr. Cette fine couche métallique barrière dite « sacrificielle » protège la couche fonctionnelle métallique du contact avec l'oxygène en particulier lors du dépôt de la couche en matériau diélectrique, ce dépôt s'effectuant généralement par pulvérisation cathodique réactive en présence d'oxygène. L'indice de réfraction de la couche en matériau diélectrique peut être compris entre 1,6 et 2,4, notamment entre 1,8 et 2,2, de préférence égal à 1,95.

De préférence, au moins une des trois couches en matériau diélectrique est une couche à base d'oxyde métallique tel que Bi₂O₃, SnO₂, In₂O₃, ZnO, ITO, Ta₂O₅, Nb₂O₅, WO₃, TiO₂ ou une couche à base d'oxyde de silicium tel que SiO₂, SiOₓC_{y}, SiOₓN_{y} et/ou une couche à base de nitrure du type Si₃N₄, AIN ou nitrure mixte SiₓAl_{y}N_{z}.

De préférence encore, au moins une des trois couches en matériau diélectrique est une couche à base d'oxyde de zinc ZnO.

Selon une variante particulièrement préférée de l'invention, la couche en matériau diélectrique du revêtement « interne » présente une épaisseur géométrique comprise entre 85 et 95 nm.

Pour des raisons technologiques, il peut être avantageux que l'épaisseur optique de la couche en matériau diélectrique du revêtement « externe supérieur » soit égale à au moins 1,8 fois, notamment comprise entre 1,9 et 2,5 fois, celle de la couche en matériau diélectrique du revêtement « externe inférieur ».

En effet, l'épaisseur optique la plus importante pour la couche en matériau diélectrique des revêtements « externes » est déterminante pour l'obtention de la couleur en réflexion. Il est donc possible de mieux contrôler celle-ci lors de la pulvérisation de la dernière couche et d'interrompre cette étape de pulvérisation une fois l'aspect colorimétrique en réflexion désiré obtenu.

Le substrat sur lequel est déposé l'empilement de couches minces peut être d'origine minérale, en verre tout particulièrement. Il peut aussi être d'origine organique, notamment à base de polymère rigide ou semi-rigide du type polycarbonate PC, polyméthacrylate de méthyle PMMA. On peut également déposer l'empilement sur des substrats semi-rigides ou souples du type polyéthylène téréphtalate PET, substrats par la suite associés par feuilletage à un substrat rigide.

Le substrat peut être sensiblement plan ou bombé. On peut effectuer le bombage du substrat nu ou déjà muni de l'empilement de couches minces selon l'invention. Dans ce dernier cas de figure, on veillera à ce que la qualité optique de l'empilement de couches minces soit préservée lors du traitement thermique.

Le substrat peut être choisi clair, du type verre silico-sodo-calcique clair ou teinté dans la masse. (Lorsqu'il est clair, il peut cependant être associé à un substrat en verre teinté dans la masse une fois assemblé au vitrage du type vitrage feuilleté ou multiple).

Le substrat muni de l'empilement de couches minces peut présenter une structure de vitrage feuilleté, notamment comportant au moins deux substrats transparents du type en verre séparés par un intercalaire comprenant au moins une feuille de matière thermoplastique, notamment à base de PVB.

Le vitrage selon l'invention précédemment défini est remarquable en ce qu'il présente une transmission lumineuse T_{L} d'au moins 75% et une réflexion énergétique totale R_{E} d'au moins 30%.

L'invention trouve particulièrement application en tant que vitrage de véhicule automobile, en particulier un pare-brise.

L'invention sera à présent décrite ci-après plus en détail sur la base d'un exemple de réalisation à l'aide de la figure 1 unique annexée.

### EXEMPLE DE REALISATION

Dans tous les exemples suivants, on précise que la couche en ZnO a un indice de réfraction proche de 1,95.

Une feuille de verre flotté de 2 mm d'épaisseur est pourvue sur une face, suivant le procédé de la pulvérisation cathodique assistée par champ magnétique d'un empilement de couches minces dont la séquence est la suivante (les épaisseurs géométriques de chacune des couches minces sont indiquées en nanomètres) :

| | |
|---|---|
| ZnO | 28 nm |
| Ag | 9,5 nm |
| Zn | 1,5 nm |
| ZnO | 90 nm |
| Ag | 9,5 nm |
| Zn | 1,5 nm |
| ZnO | 61 nm |

La feuille de verre revêtue est transformée, au moyen d'une pellicule de polyvinylbutyral de 0,76 mm d'épaisseur et d'une autre feuille de verre flotté non revêtue de 2 mm d'épaisseur, en un vitrage feuilleté, l'empilement de couches minces étant tourné vers l'intérieur. Les mesures de couleur sont effectuées sur le vitrage feuilleté fini, l'incidence de la lumière et la mesure de couleur des rayons lumineux réfléchis étant effectuées sur la face de la feuille de verre flotté revêtue.

La mesure de la transmission T_{L} dans le domaine du spectre visible et la réflexion d'énergie totale R_{E} (Parry Moon/Airmass 2) sont effectuées selon les normes DIN 5033 et ISO 9050. La couleur de réflexion est également déterminée suivant la norme DIN 5033, notamment au moyen de l'illuminant D₆₅ sous un angle d'incidence de la lumière de 10 degrés. La couleur de réflexion est rendue dans ce cas par les coordonnées de couleur a*, b*, par la longueur d'onde dominante et par la valeur de la pureté pₑ.

Les mesures fournissent les valeurs suivantes :

| | |
|---|---|
| T_{L} | 75,7 % |
| R_{E} | 31,2 % |
| a∗ | -3,33 |
| b∗ | -25,62 |
| longueur d'onde dominante | 477 µm |
| pₑ | 40,5 % |

### EXEMPLE COMPARATIF 1

Une feuille de verre flotté également de 2 mm d'épaisseur a été revêtue au moyen de la même succession de couches à l'intérieur des domaines d'épaisseur connus des couches minces suivant le même procédé de dépôt, de telle sorte que les conditions concernant T_{L} et R_{E} soient remplies. Cet empilement de couches minces présentait les épaisseurs géométriques suivantes pour chacune des couches minces :

| | |
|---|---|
| ZnO | 32 nm |
| Ag | 9,5 nm |
| Zn | 1,5 nm |
| ZnO | 90 nm |
| Ag | 9,5 nm |
| Zn | 1,5 nm |
| ZnO | 32 nm |

La feuille de verre flotté revêtue a été transformée, comme dans le cas de l'exemple de réalisation décrit précédemment, en un vitrage feuilleté, sur lequel les mesures optiques ont été effectuées.

Les mesures ont fourni les valeurs suivantes :

| | |
|---|---|
| T_{L} | 75 % |
| R_{E} | 29,4 % |
| a∗ | -4,62 |
| b∗ | -4,4 |
| longueur d'onde dominante | 486,6 µm |
| pₑ | 11,3 % |

Les mesures montrent que, avec des valeurs de transmission et de réflexion comparables à l'exemple de réalisation, les valeurs de couleur sont fortement différentes et les couches réfléchissent légèrement dans le vertbleu.

### EXEMPLE COMPARATIF 2

Les épaisseurs géométriques des couches sont modifiées à l'intérieur des domaines d'épaisseur connus avec un empilement de couches sensiblement symétrique, pour obtenir la même impression de couleur que celle qui est atteinte suivant l'exemple de réalisation. L'empilement de couches minces présentait les épaisseurs géométriques suivantes pour chacune des couches minces :

| | |
|---|---|
| ZnO | 58 nm |
| Ag | 9,5 nm |
| Zn | 1,5 nm |
| ZnO | 110 nm |
| Ag | 9,5 nm |
| Zn | 1,5 nm |
| ZnO | 58 nm |

Les mesures ont fourni les valeurs suivantes :

| | |
|---|---|
| T_{L} | 73,4 % |
| R_{E} | 32,6 % |
| a∗ | -2,65 |
| b∗ | -36,99 |
| longueur d'onde dominante | 476 µm |
| pₑ | 51,5 % |

Ces valeurs montrent qu'une couleur comparable a certes été obtenue mais que la transmission T_{L} se trouve dans ce cas en dessous de la valeur minimale de 75% requise pour des pare-brise.

## Revendications

1. Vitrage comprenant au moins un substrat transparent muni d'un empilement de couches minces comportant au moins deux couches fonctionnelles à propriétés de réflexion dans l'infrarouge et/ou dans le rayonnement solaire, notamment métalliques, alternées avec trois revêtements comportant chacun au moins une couche en matériau diélectrique, la couche en matériau diélectrique du revêtement « interne » présentant une épaisseur optique comprise entre 140 et 220 nm, notamment entre 152 et 200 nm, ***caractérisé en ce que*** l'épaisseur optique d'une des deux couches en matériau diélectrique des revêtements « externes » est égale à au moins 1,8 fois, notamment comprise entre 1,9 et 2,5 fois celle de l'autre de ces deux couches.

2. Vitrage selon la revendication 1, ***caractérisé en ce qu'****au* moins une des deux couches fonctionnelles est en argent, ou en alliage métallique comportant de l'argent.

3. Vitrage selon la revendication 1 ou 2, ***caractérisé en ce que*** l'épaisseur géométrique des couches fonctionnelles est inférieure à 15 nm, de préférence comprise entre 8 et 12 nm.

4. Vitrage selon l'une quelconque des revendications précédentes, ***caractérisé en ce qu'***au moins un des revêtements surmontant une des deux couches fonctionnelles comprend une fine couche métallique « barrière » au moins partiellement oxydée, de préférence d'une épaisseur de 0,5 à 4 nm et notamment choisie parmi au moins un des métaux comprenant Ti, Ta, Nb, Ni, Cr, Zn, Sn ou un alliage du type acier inoxydable ou alliage Ni-Cr.

5. Vitrage selon l'une quelconque des revendications précédentes, ***caractérisé en ce que*** l'indice de réfraction des couches en matériau diélectrique est compris entre 1,6 et 2,4, notamment entre 1,8 et 2,2, de préférence égal à 1,95.

6. Vitrage selon l'une quelconque des revendications précédentes, ***caractérisé en ce qu'***au moins une des trois couches en matériau diélectrique est une couche à base d'oxyde métallique tel que Bi₂O₃, SnO₂, In₂O₃, ZnO, ITO, Ta₂O₅, Nb₂O₅, WO₃, TiO₂ ou une couche à base d'oxyde de silicium tel que SiO₂, SiOₓC_{y}, SiOₓN_{y} et/ou une couche à base de nitrure du type Si₃N₄, AIN ou nitrure mixte SiₓAl_{y}N_{z}.

7. Vitrage selon l'une quelconque des revendications précédentes, ***caractérisé en ce qu'****au* moins une des trois couches en matériau diélectrique est une couche à base d'oxyde de zinc ZnO.

8. Vitrage selon l'une quelconque des revendications précédentes, ***caractérisé en ce que*** la couche en matériau diélectrique du revêtement « interne » présente une épaisseur géométrique comprise entre 85 et 95 nm.

9. Vitrage selon l'une quelconque des revendications précédentes, ***caractérisé en ce que*** l'une des deux couches en matériau diélectrique des revêtements « externes » présente une épaisseur géométrique comprise entre 23 et 30 nm, et **en ce que** l'autre de ces deux couches présente une épaisseur géométrique comprise entre 55 et 65 nm.

10. Vitrage selon l'une quelconque des revendications précédentes, ***caractérisé en ce que*** l'épaisseur optique de la couche en matériau diélectrique du revêtement « externe supérieur » est égale à au moins 1,8 fois, notamment comprise entre 1,9 et 2,5 fois, celle de la couche en matériau diélectrique du revêtement « externe inférieur ».

11. Vitrage selon l'une quelconque des revendications précédentes, ***caractérisé en ce qu'***il présente une structure de vitrage feuilleté, notamment comportant au moins deux substrats transparents du type en verre séparée par un intercalaire comprenant au moins une feuille de matière thermoplastique, notamment à base de PVB.

12. Vitrage selon l'une quelconque des revendications précédentes, ***caractérisé en ce qu'***il présente une transmission lumineuse T_{L} d'au moins 75% et une réflexion énergétique totale R_{E} d'au moins 30%.

13. Vitrage selon l'une quelconque des revendications précédentes, ***caractérisé en ce qu'***il constitue un vitrage de véhicule automobile, en particulier un pare-brise.

## Claims

1. Glazing comprising at least one transparent substrate provided with a stack of thin coatings having at least two functional coatings with infrared and/or solar radiation reflection properties and in particular of a metallic nature, alternating with three coverings, each including at least one dielectric material coating, the dielectric material coating of the "internal" covering having an optical thickness between 140 and 220 nm, particularly between 152 and 200 nm, **characterized in that** the optical thickness of one of the two dielectric material coatings of the "external" coverings is equal to at least 1.8 times and in particular between 1.9 and 2.5 times that of the other of said two coatings.

2. Glazing according to claim 1, **characterized in that** at least one of the two functional coatings is of silver or a metallic alloy incorporating silver.

3. Glazing according to claim 1 or 2, **characterized in that** the geometrical thickness of the functional coatings is below 15 nm and is preferably between 8 and 12 nm.

4. Glazing according to any one of the preceding claims, **characterized in that** at least one of the coverings surmounting one of the two functional coatings comprises a thin, metallic "barrier" coating, which is at least partly oxidized and preferably having a thickness between 0.5 and 4 nm and is in particular chosen from among at least one of the materials including Ti, Ta, Nb, Ni, Cr, Zn, Zn or an alloy of the stainless steel type or Ni-Cr alloy.

5. Glazing according to any one of the preceding claims, **characterized in that** the refractive index of the dielectric material coatings is between 1.6 and 2.4, particularly between 1.8 and 2.2 and is preferably equal to 1.95.

6. Glazing according to any one of the preceding claims, **characterized in that** at least one of the three dielectric material coatings is based on a metal oxide such as Bi₂O₃, SnO₂, In₂O₃, ZnO, ITO, Ta₂O₅, Nb₂O₅, WO₃, TiO₂ or a coating based on silicon oxide such as SiO₂, SiOₓC_{y}, SiOₓN_{y} and/or a coating based on nitride of the type Si₃N₄, AlN or mixed nitride SiₓAl_{y}N_{z}.

7. Glazing according to any one of the preceding claims, **characterized in that** at least one of the three dielectric material coatings is based on zinc oxide ZnO.

8. Glazing according to any one of the preceding claims, **characterized in that** the dielectric material coating of the "internal" covering has a geometrical thickness between 85 and 95 nm.

9. Glazing according to any one of the preceding claims, **characterized in that** one of the two dielectric material coatings of the "external" covering has a geometrical thickness between 23 and 30 nm and **in that** the other of said two coatings has a geometrical thickness between 55 and 65 nm.

10. Glazing according to any one of the preceding claims, **characterized in that** the optical thickness of the dielectric material coating of the "upper external" covering is equal to at least 1.8 times, particularly between 1.9 and 2.5 times, that of the dielectric material coating of the "lower external" covering.

11. Glazing according to any one of the preceding claims, **characterized in that** it has a laminated glazing structure, more particularly having at least two transparent substrates of the glass type separated by a spacer incorporating at least one thermoplastic material sheet, particularly based on PVB.

12. Glazing according to any one of the preceding claims, **characterized in that** it has a light transmission T_{L} of at least 75% and a total energy reflection R_{E} of at least 30%.

13. Glazing according to any one of the preceding claims, **characterized in that** it constitutes a car glazing, in particular a windscreen.

## Patentansprüche

1. Glasscheibe mit mindestens einem transparenten Substrat mit einem Dünnschichtsystem, das mindestens zwei insbesondere metallische Funktionsschichten mit Reflexionseigenschaften im Infrarotbereich und / oder im Bereich der Sonnenstrahlung umfasst, welche im Wechsel mit drei jeweils mindestens eine dielektrische Schicht umfassenden Beschichtungen angeordnet sind, wobei die aus dielektrischem Material bestehende Schicht der "inneren" Beschichtung eine optische Dicke zwischen 140 und 220 nm hat, insbesondere zwischen 152 und 200 nm, **dadurch gekennzeichnet, dass** die optische Dicke einer der beiden dielelektrischen Schichten der "äußeren" Beschichtungen mindestens gleich dem 1,8fachen, insbesondere zwischen dem 1,9fachen und dem 2,5fachen der Dicke der anderen dieser beiden Schichten beträgt.

2. Glasscheibe nach Anspruch 1, **dadurch gekennzeichnet, daß** wenigstens eine der beiden Funktionsschichten aus Silber oder einer metallischen, Silber enthaltenden Legierung besteht.

3. Glasscheibe nach Anspruch 1 oder 2, **dadurch gekennzeichnet, daß** die geometrische Dicke der Funktionsschichten weniger als 15 nm, vorzugsweise zwischen 8 und 12 nm beträgt.

4. Glasscheibe nach einem der vorstehenden Ansprüche, **dadurch gekennzeichnet, dass** mindestens eine der Beschichtungen oberhalb einer der beiden Funktionsschichten eine dünne metallische, zumindest teiloxidierte Barriereschicht vorzugsweise einer Dicke von 0,5 bis 4 nm und insbesondere aus mindestens einem der Metalle Ti, Ta, Nb, Ni, Cr, Zn, Sn oder einer Legierung des Edelstahltyps oder Ni-Cr-Legierung umfasst.

5. Glasscheibe nach einem der vorstehenden Ansprüche, **dadurch gekennzeichnet, dass** der Brechungsindex der dielektrischen Schichten zwischen 1,6 und 2,4, insbesondere zwischen 1,8 und 2,2 beträgt und bevorzugt gleich 1,95 ist.

6. Glasscheibe nach einem der vorstehenden Ansprüche, **dadurch gekennzeichnet, dass** mindestens eine der drei dielektrischen Schichten eine Schicht auf Metalloxidbasis wie Bi₂O₃, SnO₂, In₂O₃, ZnO, ITO, Ta₂O₅, Nb₂O₅, WO₃, TiO₂ oder eine Schicht auf Siliziumbasis wie SiO₂, SiOₓC_{y}, SiOₓN_{y} und / oder eine Schicht auf Nitridbasis des Typs Si₃N₄, AIN oder Mischnitrid SiₓAl_{y}N_{z} ist.

7. Glasscheibe nach einem der vorstehenden Ansprüche, **dadurch gekennzeichnet, dass** mindestens eine der drei dielektrischen Schichten eine Schicht auf Zinkoxidbasis ZnO ist.

8. Glasscheibe nach einem der vorstehenden Ansprüche, **dadurch gekennzeichnet, dass** die dielektrische Schicht der "inneren" Beschichtung eine geometrische Dicke zwischen 85 und 95 nm hat.

9. Glasscheibe nach einem der vorstehenden Ansprüche, **dadurch gekennzeichnet, dass** die eine der beiden dielektrischen Schichten der "äußeren" Beschichtungen eine geometrische Dicke zwischen 23 und 30 nm hat, und dass die andere dieser beiden Schichten eine geometrische Dicke zwischen 55 und 65 nm hat.

10. Glasscheibe nach einem der vorstehenden Ansprüche, **dadurch gekennzeichnet, dass** die optische Dicke der dielektrischen Schicht der "äußeren oberen" Beschichtung mindestens 1,8 mal, insbesondere 1,9 bis 2,5 mal so groß ist wie die optische Dicke der dielektrischen Schicht der "äußeren unteren" Beschichtung.

11. Glasscheibe nach einem der vorstehenden Ansprüche, **dadurch gekennzeichnet, dass** sie eine Verbundglasstruktur hat, insbesondere mit mindestens zwei transparenten Substraten des Glastyps, die durch eine mindestens eine aus thermoplastischem Material bestehende Folie, insbesondere auf PVB-Basis, getrennt sind.

12. Glasscheibe nach einem der vorstehenden Ansprüche, **dadurch gekennzeichnet, dass** sie eine Lichttransmission T_{L} von mindestens 75 % und eine Gesamtenergiereflexion R_{E} von mindestens 30 % hat.

13. Glasscheibe nach einem der vorstehenden Ansprüche, **dadurch gekennzeichnet, dass** sie eine Automobilglasscheibe, insbesondere eine Windschutzscheibe, ist.
